# NEUE EUROPÄISCHE PATENTSCHRIFT

(11) **EP 3 155 228 B2**
(45) Veröffentlichungstag und Bekanntmachung des Hinweises auf die Entscheidung über den Einspruch: **28.06.2023**
(45) Hinweis auf die Patenterteilung: 21.03.2018
(21) Anmeldenummer: 15762950.2
(22) Anmeldetag: 27.08.2015
(51) Int. Cl.: F01D 5/26, G01M 1/04, G01M 1/22, F01D 5/02, F01D 5/04, F01D 5/06, F01D 17/04, F01D 21/00, G01H 1/00

(54) **VERFAHREN ZUM BETREIBEN EINER MASCHINENANLAGE MIT EINEM WELLENSTRANG**
METHOD FOR OPERATING A MACHINE SYSTEM WITH A SHAFT TRAIN
PROCÉDÉ DE FONCTIONNEMENT D'UNE INSTALLATION DE MACHINE DOTÉE D'UNE LIGNE D'ARBRES

(30) Priorität: 01.09.2014 EP 14183042
(43) Veröffentlichungstag der Anmeldung: 19.04.2017
(73) Patentinhaber: Siemens Energy Global GmbH & Co. KG, 81739 München (DE)
(72) Erfinder: BALKOWSKI, Ingo, 47647 Kerken (DE); EHEHALT, Ulrich, 45239 Essen (DE); HENSEL, Oliver, 45468 Mülheim an der Ruhr (DE); HUCKRIEDE, Dirk, 41352 Korschenbroich (DE); KÜPPER, Thomas, 41564 Kaarst (DE); LACOMBE, Bernd, 46348 Raesfeld (DE); MERMERTAS, Ümit, 45478 Mülheim an der Ruhr (DE); PFEIFER, Uwe, 12557 Berlin (DE)
(86) Internationale Anmeldenummer: PCT/EP2015/069642
(87) Internationale Veröffentlichungsnummer: WO 2016/034487

(56) Entgegenhaltungen:
- EP-A2- 0 585 623
- DE-A1- 2 734 396
- DE-A1- 4 032 299
- DE-A1-102008 004 061
- GB-A- 867 858
- "Anforderungen an ein Überwachungssystem zum Schutz von Turbosätzen vor kritischen subsynchronen Resonanzen Foliensatz einer Präsentation im Rahmen der 6", Essener Tagung Turbogeneratoren in Kraftwerken - Technik - Instandhaltung - Schäden, 21 February 2013 (2013-02-21),
- Torsionsanalysesysteme mit berührungsloser Drehmomenterfassung, Forschungsvereinigung Antriebstechnik Frankfurt, 30 November 2004,' Fraunehhofer Institut ITWM & Uni Dortmud Lehrstuhl EAM'
- Erweiterte Diagnoseverfahren.für Kraftwerksturbosätze, Band. 3, W&O Seminare, Heppenheim. September 2009

## Beschreibung

Die Erfindung betrifft ein Verfahren zum Betreiben einer Maschinenanlage mit einem Wellenstrang.

Eine Maschinenanlage, wie beispielsweise ein Kraftwerk zur Erzeugung von Strom, weist einen elektrischen Generator und mindestens eine Turbine auf, wobei die Turbine den Generator antreibt. Dazu sind die Turbine und der Generator auf einem gemeinsamen Wellenstrang angeordnet. Es ist möglich in dem Wellenstrang Kupplungen vorzusehen, um einzelne Turbinen in den Wellenstrang einzukuppeln oder von dem Wellenstrang abzukuppeln.

Der Generator speist im Betrieb des Kraftwerks Strom in ein Stromnetz ein. Elektrische Störfälle in dem Stromnetz können dazu führen, dass via den Generator eine Torsionsschwingung des Wellenstrangs angeregt wird. Im ungünstigsten Fall kann es dabei zu einer Anregung einer der Eigenfrequenzen des Wellenstrangs kommen. Die Anregung bei einer Eigenfrequenz führt zu einer hohen torsionalen Spannungsbelastung des Wellenstrangs, was zu einer Reduzierung seiner Lebensdauer oder zu der Bildung von Spannungsrissen führen kann. Es wird erwartet, dass die Störfälle in dem Stromnetz in Zukunft häufiger auftreten werden, weil sich im Rahmen der Energiewende die Strukturen des Stromnetzes ändern.

Herkömmlich wird die Belastung des Wellenstrangs gemessen, in dem an mehreren Axialpositionen des Wellenstrangs seine Drehzahl hochauflösend gemessen wird. Aus den Differenzen der Drehzahlen an den unterschiedlichen Axialpositionen wird dann auf die Belastung des Wellenstrangs zurückgeschlossen. Jedoch sind in diesem Verfahren die Messtechnik und die zugehörige Auswertung aufwändig. Alternativ ist es möglich Schwingungen in der elektrischen Energieableitung des Kraftwerks zu messen. Für den Fall, dass in der Energieableitung potentiell anregende Schwingungen identifiziert werden, können jedoch keine Rückschlüsse auf die tatsächliche Belastung des Wellenstrangs gezogen werden.

DE 40 32 299 A1 beschreibt ein Verfahren zum Überwachen eines drehbaren Bauteils, bei dem der Schwingweg des Bauteils in radialer Richtung zum Bauteil und die Drehlage des Bauteiles zeitabhängig gemessen werden. EP 0 585 623 A2 beschreibt ein Verfahren zur Früherkennung eines Risses in einer rotierenden Welle. DE 27 34 396 A1 beschreibt ein Verfahren zur Überwachung von Torsionsschwingungen an Wellen, bei der die Augenblicksleistung des Generators gemessen wird.

Aufgabe der Erfindung ist es ein Verfahren zum Betreiben einer Maschinenanlage mit einem Wellenstrang zu schaffen, bei dem Belastungen des Wellenstrangs durch Torsionsschwingungen einfach detektierbar sind.

Die Aufgabe wird gelöst durch ein Verfahren gemäß Anspruch 1.

Durch das Bestimmen der Korrelationen zwischen den an der Position und der Messstelle auftretenden Spannungsamplituden aus den rechnerisch bestimmten Spannungen können vorteilhaft Spannungsamplituden an Messstellen des Wellenstrangs bestimmt werden, die einer Messung nicht zugänglich sind. Um die Spannungsamplituden an der Position zu bestimmen, genügt eine einzige Messstelle an dem Wellenstrang, wobei die Messstelle beliebig gewählt werden kann. Dadurch ist das Verfahren vorteilhaft einfach durchführbar. Indem jeweils eine Korrelation für jede Torsionsmode bestimmt wird, können die Spannungsamplituden an der Position vorteilhaft mit einer hohen Genauigkeit bestimmt werden.

Auf das Signal hin können Maßnahmen ergriffen werden, um die Torsionsschwingungen des Wellenstrangs zu vermindern. Handelt es sich bei der Maschinenanlage um ein Kraftwerk zur Einspeisung von Strom in ein Stromnetz, kann beispielsweise eine Desynchronisation zwischen den Anregungen aus dem Stromnetz und den Torsionsschwingungen des Wellenstrangs vorgenommen werden. Dies kann beispielsweise erfolgen, in dem durch Abkoppeln einer Turbine oder einer Mehrzahl an Turbinen von dem Wellenstrang seine Eigenfrequenzen geändert werden. Auch ist es möglich das Kraftwerk vom Stromnetz durch ein Unterbrechen von elektrischen Leitungen abzukoppeln.

Bevorzugt wird in Schritt e) die Spannung mittels eines magnetostriktiven Sensors und/oder mittels eines Dehnmessstreifens gemessen, wobei die mittels des Dehnmessstreifens gemessenen Spannungen mittels Telemetrie übertragen werden. Der magnetostriktive Sensor erzeugt ein mittels einer Sendespule ein hochfrequentes Magnetfeld und durchflutet die Oberfläche des Wellenstrangs mit dem Magnetfeld. Der magnetostriktive Sensor verfügt über eine oder mehrere Empfangsspulen, welche mit der Sendespule einen magnetischen Kreis bilden und zur Detektion von Torsionsspannungen speziell angeordnet sind. Mit der speziellen Anordnung der Sendespule und Empfangsspulen kann die magnetische Suszeptibilität an der Oberfläche des Wellenstrangs bestimmt werden. Weil aufgrund des Villari-Effektes die magnetische Suszeptibilität eines Körpers von seiner mechanischen Spannung abhängt, hängt auch das von den Empfangsspulen detektierte Signal von der mechanischen Spannung der Oberfläche des Wellenstrangs ab. Der magnetostriktive Sensor gibt ein analoges Ausgangssignal aus, das proportional zu der Torsionsspannung des Wellenstrangs ist. Durch die Proportionalität des Ausgangssignals zu der Torsionsspannung ist die Datenverarbeitung vorteilhaft nur wenig rechenintensiv, wodurch das Verfahren einfach und schnell durchführbar ist. Sowohl der magnetostriktive Sensor als auch der Dehnmessstreifen ermitteln die Spannung des Wellenstrangs unmittelbar, wodurch das Verfahren ebenfalls einfach durchführbar ist.

Es ist bevorzugt, dass in Schritt f) die in Schritt e) gemessenen Spannungen mittels eines Bandpassfilters gefiltert werden, der ein um die Eigenfrequenz herum angeordnetes Frequenzband passieren lässt und/oder dass eine Fourier Transformation, insbesondere eine Fast-Fourier-Transformation, der in Schritt e) gemessenen Spannungen durchgeführt wird. Damit lassen sich die Spannungsamplituden der unterschiedlichen Torsionsschwingungsmoden vorteilhaft einfach bestimmen. In dem Fall, dass der Bandpassfilter eingesetzt wird, kann in Schritt g) das Signal schon kurze Zeit nach dem Erreichen der maximalen zweiten Spannungsamplitude ausgegeben wird. In dem Fall, dass die Fourier Transformation oder die Fast Fourier Transformation angewendet wird, erfolgt die Ausgabe des Signales nach Abschluss der Berechnung.

Es ist bevorzugt, dass in Schritt e) die Spannung an einer Mehrzahl in unterschiedlichen Axialpositionen des Wellenstrangs angeordneten Messstellen gemessen wird. Hier kann durch ein arithmetisches Mitteln der in der Mehrzahl an Messstellen ermittelten Eigenfrequenzen eine hohe Messgenauigkeit der Eigenfrequenzen erzielt werden. Zudem kann es vorkommen, dass eine der Messstellen mit einem Schwingungsknoten einer der Torsionsschwingungsmoden zusammenfällt, wodurch mit der Messstelle die Torsionsschwingungsmode nicht sichtbar wäre. Durch das Vorsehen der Mehrzahl der Messstellen ist die Wahrscheinlichkeit sehr gering, dass für eine Torsionsschwingungsmode alle Schwingungsknoten auf den Messstellen liegen. Damit können mit einer hohen Wahrscheinlichkeit alle relevanten Torsionsschwingungsmoden detektiert werden.

In Schritt f) wird bevorzugt für eine ausgewählte Torsionsschwingungsmode nur diejenige Messstelle herangezogen, die für die ausgewählte Torsionsschwingungsmode die höchste in Schritt a) rechnerisch bestimmte mechanische Spannung aufweist. Dadurch wird vorteilhaft ein hohes Signal zu Rausch Verhältnis bei der Bestimmung der Spannungsamplituden erreicht. Es ist bevorzugt, dass in Schritt f) ein Zuordnen der Spannungsamplituden zu einer der Eigenfrequenzen erfolgt, in dem ein experimentelles Verhältnis der in Schritt f) bestimmten Spannungsamplituden und/oder Schwingungsphasen an der Mehrzahl an den Messstellen gebildet wird, ein rechnerisches Verhältnis der rechnerisch bestimmten Spannungsamplituden und/oder Schwingungsphasen an der Mehrzahl an den Messstellen gebildet wird und das experimentelle Verhältnis mit dem rechnerischen Verhältnis verglichen wird. Durch den Vergleich des experimentellen Verhältnisses mit dem rechnerischen Verhältnis lassen sich die Torsionsschwingungsmoden, in denen der Wellenstrang schwingt, vorteilhaft mit einer hohen Wahrscheinlichkeit richtig ermitteln.

Es ist bevorzugt, dass die in Schritt a) rechnerisch bestimmten Eigenfrequenzen entweder niedriger oder gleich der zweieinhalbfachen der Drehfrequenz des Wellenstrangs sind oder, in dem Fall, dass die Maschinenanlage ein Kraftwerk zur Stromerzeugung ist und die Netzfrequenz höher als die Drehfrequenz ist, niedriger oder gleich der zweieinhalbfachen der Netzfrequenz sind. Diese Eigenfrequenzen resultieren in besonders starken Spannungsbelastungen des Wellenstrangs, so dass ein Überwachen von diesen Frequenzen besonders vorteilhaft ist. In Schritt a) wird bevorzugt beim rechnerischen Bestimmen der Eigenfrequenz und der mechanischen Spannungen die Fliehkraftbelastung berücksichtigt, die der Wellenstrang im Betrieb der Maschinenanlage hat. Damit können die ersten Spannungsamplituden mit einer hohen Genauigkeit bestimmt werden. Die in Schritt b) bestimmte Korrelation zwischen der ersten Spannungsamplitude und der zweiten Spannungsamplitude ist bevorzugt eine Proportionalität.

In Schritt c) wird eine zusätzliche dritte maximale Spannungsamplitude, die höher als die erste maximale Spannungsamplitude ist, für die Position festgelegt, in Schritt d) wird eine der maximalen dritten Spannungsamplitude entsprechenden maximalen vierte Spannungsamplitude für die Messstelle anhand der Korrelation bestimmt und in Schritt g) wird ein Stop-Signal in dem Fall ausgeben, dass die in Schritt f) bestimmte Spannungsamplitude bei der Eigenfrequenz die maximale vierte Spannungsamplitude erreicht, wobei das Stop-Signal eine Abschaltung der Maschinenanlage auslöst. Damit kann vorteilhaft eine zu hohe Spannungsbelastung des Wellenstrangs automatisch unterbunden werden.

Es ist bevorzugt, dass in Schritt b) Korrelationen für eine Mehrzahl an Positionen des Wellenstrangs bestimmt werden, die für die Bildung von Spannungsschäden anfällig sind, in Schritt c) für jede Position eine jeweilige maximale erste Spannungsamplitude festgelegt wird, in Schritt d) für jede der Positionen eine entsprechende maximale zweite Spannungsamplitude bestimmt wird und in Schritt g) das Signal in dem Fall ausgegeben wird, dass eine der maximalen zweiten Spannungsamplituden erreicht wird. Damit kann vorteilhaft eine Mehrzahl an kritischen Stellen des Wellenstrangs mit lediglich einer einzigen Messstelle überwacht werden. Die maximalen ersten Spannungsamplituden an den verschiedenen Positionen können dabei gleich oder verschieden voneinander sein. Es ist auch möglich für die Mehrzahl an Positionen dritte maximale Spannungsamplituden festzulegen, wobei auch diese gleich oder verschieden voneinander sein können.

Es ist bevorzugt, dass die Messstellen auf dem Wellenstrang im Bereich eines frei liegenden Abschnitts des Wellenstrangs, im Bereich eines der Messtechnik zugänglichen Abschnitts des Wellenstrangs und/oder in einem Bereich eines rechnerisch bestimmten Spannungsmaximums angeordnet sind. Die Positionen sind bevorzugt im Bereich von Lagern, Kupplungen und/oder Schaufelfüßen angeordnet. Hierbei handelt es sich vorteilhaft um Positionen, die besonders gegen Spannungsschäden anfällig sind. Bevorzugt werden in Schritt a) die Eigenfrequenzen und die Spannungen mittels einer Finiten Elemente Methode rechnerisch bestimmt.

Im Folgenden wird anhand der beigefügten schematischen Zeichnung das erfindungsgemäße Verfahren näher erläutert. Es zeigen:
Figur 1 zeigt eine Seitenansicht eines Wellenstrangs mit vier rechnerisch bestimmten Torsionsmoden,
Figur 2 einen Querschnitt durch einen Wellenstrang mit einem magnetostriktiven Sensor und
Figur 3 ein Ablaufdiagramm eines beispielhaften Verfahrens.

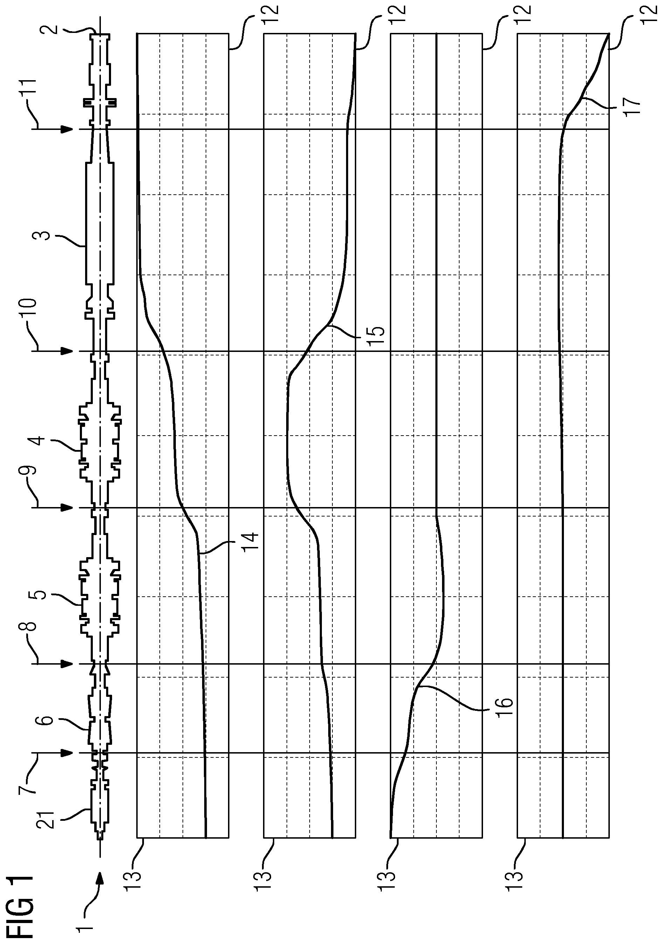

Wie es aus Figur 1 ersichtlich ist, weist eine Maschinenanlage 1 einen Generator 3 und mindestens eine Turbine auf, wobei der Generator 3 und die Turbine auf einem gemeinsamen Wellenstrang 2 angeordnet sind. Die Maschinenanlage 1 kann auch einer Mehrzahl an Wellensträngen aufweisen, wobei das Verfahren mit jedem der Wellenstränge durchgeführt wird. Die Maschinenanlage gemäß Figur 1 weist eine erste Turbine 4, eine zweite Turbine 5, eine dritte Turbine 6 und eine vierte Turbine 21 auf, die an einer axialen Seite des Generators 3 in dieser Reihenfolge mit zunehmendem Abstand von dem Generator 3 angeordnet sind. Der Wellenstrang 2 weist eine erste Messstelle 7, eine zweite Messstelle 8, eine dritte Messstelle 9, eine vierte Messstelle 10 und eine fünfte Messstelle 11 auf, die an verschiedenen und einer Messtechnik zugänglichen Axialpositionen des Wellenstrangs 2 angeordnet sind.

In Figur 1 sind ebenfalls rechnerisch bestimmte Torsionsschwingungsmoden dargestellt. Dargestellt sind dabei die vier niederfrequentesten Torsionsschwingungsmoden 14 bis 17, wobei die erste Torsionsschwingungsmode 14 die niedrigste Eigenfrequenz, die zweite Torsionsschwingungsmode 15 die zweitniedrigste Eigenfrequenz, die dritte Torsionsschwingungsmode 16 die drittniedrigste Eigenfrequenz und die vierte Torsionsschwingungsmode 17 die viertniedrigste Eigenfrequenz aufweist. Die vier Eigenrequenzen sind dabei niedriger als die zweieinhalbfache der Drehfrequenz des Wellenstrangs oder die zweieinhalbfache der Netzfrequenz, je nach dem welche von beiden Frequenzen höher ist. Jede der Torsionsschwingungsmoden 14 bis 17 ist beschrieben durch eine jeweilige Auftragung, in der über die Abszisse 12 die Axialposition des Wellenstrangs 2 und über die Ordinate 13 der Verdrehwinkel des Wellenstrangs 3 aufgetragen ist. Weil der Gradient des Verdrehwinkels proportional zu der mechanischen Spannung ist, kann durch Bilden des Gradienten des Verdrehwinkels die mechanische Spannung rechnerisch bestimmt werden. Es ist auch möglich die mechanische Spannung mittels einer Finiten Elemente Methode zu bestimmen.

In dem Verfahren wird mindestens eine Position des Wellenstrangs 2 identifiziert, die für die Bildung von Spannungsschäden anfällig ist. Die Spannungsschäden können Spannungsrisse und/oder Gewaltbrüche sein. Diese Positionen können beispielsweise in dem Bereich von Lagern, Kupplungen und/oder Schaufelfüßen liegen. Für jede der Positionen wird eine maximale erste Spannungsamplitude festgelegt, wobei diese derart gewählt wird, dass sie in einem Normalbetrieb der Maschinenanlage, in der keine resonanten Störungen auftreten, nicht erreicht wird. Des Weiteren ist sie derart gewählt, dass bei einem Erreichen noch keine Spannungsschäden an der Position auftreten. Die maximale erste Spannungsamplitude ist dabei gleich für alle Torsionsschwingungsmoden 14 bis 17. Es ist auch möglich eine maximale dritte Spannungsamplitude für die Position festzulegen, die höher als die maximale erste Spannungsamplitude ist. Die dritte maximale Spannungsamplitude ist dabei derart gewählt, dass bei einem Erreichen noch keine Spannungsschäden an dem Wellenstrang auftreten.

Anhand der rechnerisch bestimmten Spannungen wird für jede Torsionsschwingungsmode eine Korrelation zwischen der Spannungsamplitude an der Position und der Spannungsamplitude an mindestens eine der Messstellen 7 bis 11 bestimmt, wobei die Korrelation eine Proportionalität ist. Anhand der Korrelation kann eine zweite maximale Spannungsamplitude für die Messstelle 7 bis 11 bestimmt werden, wobei die zweite maximale Spannungsamplitude an der Messstelle 7 bis 11 auftritt, wenn die erste maximale Spannungsamplitude an der Position auftritt. Anhand der Korrelation kann auch eine vierte maximale Spannungsamplitude für die Messstelle 7 bis 11 bestimmt werden, wobei die vierte maximale Spannungsamplitude an der Messstelle 7 bis 11 auftritt, wenn die dritte maximale Spannungsamplitude an der Position auftritt.

Die mechanische Spannung der radial außen liegenden Oberfläche des Wellenstrangs 2 wird an jeder Messstelle 7 bis 11 mit jeweils mindestens einem magnetostriktiven Sensor 18 gemessen. Aus Redundanzgründen kann eine Mehrzahl an magnetostriktiven Sensoren an jeder Messstelle 7 bis 11 vorgesehen werden. Der magnetostriktive Sensor 18 weist eine Sendespule auf, mittels der ein Magnetfeld erzeugt wird. Die Oberfläche des Wellenstrangs 2 wird mit dem Magnetfeld durchflutet. Der magnetostriktive Sensor 18 weist eine Empfängerspule oder mehrere Empfängerspulen auf, die in einem magnetischen Kreis gemeinsam mit der Sendespule und der durchfluteten Oberfläche des Wellenstrangs 2 so geeignet angeordnet sind, dass damit die magnetische Suszeptibilität der Oberfläche des Wellenstrangs 2 bestimmt werden kann. Aufgrund des Villari-Effektes hängt die magnetische Suszeptibilität des Wellenstrangs 2 von seiner mechanischen Spannung ab. Das vom magnetostriktiven Sensor ausgegebene Signal ist dabei proportional zu der Torsionsspannung des Magnetfeldes. Wie es auf Figur 1 ersichtlich ist, sind die Erregerspule und die Empfängerspulen in einem Messkopf 19 des magnetostriktiven Sensors 18 integriert. Zwischen dem Messkopf 19 und dem Wellenstrang 2 ist ein Luftspalt 20 angeordnet, wodurch das Verfahren mit dem magnetostriktiven Sensor 18 berührungsfrei durchgeführt werden kann.

In dem Verfahren werden mittels des magnetostriktiven Sensors 18 die mechanischen Spannungen zeitaufgelöst gemessen. Die gemessenen Spannungen können dann mittels eines Bandpassfilters gefiltert werden, der ein um die Eigenfrequenz der Torsionschwingungssmode herum angeordnetes Frequenzband passieren lässt. Alternativ ist es möglich, die gemessenen Spannungen mittels einer Fourier Transformation, insbesondere einer Fast Fourier Transformation, auszuwerten. Sobald diese gefilterte Spannung oder die mittels der Fourier erhaltene Spannungsamplitude die zweite maximale Spannungsamplitude erreicht oder überschreitet, wird ein Signal ausgegeben. Für den Fall, dass die Eigenfrequenzen nahe zusammen liegen, kann es erforderlich sein einen Bandpassfilter vorzusehen, der Eigenfrequenzen für eine Mehrzahl an Torsionsschwingungsmoden passieren lässt. In diesem Fall wird das Signal ausgegeben, wenn die gefilterte Spannung die niedrigste der zweiten maximalen Spannungsamplituden der Mehrzahl an Torsionsschwingungsmoden erreicht oder überschreitet. Für den Fall, dass eine maximale vierte Spannungsamplitude vorgesehen ist, wird ein Abschalten der Maschinenanlage 1 in dem Fall vorgesehen werden, dass die gefilterte Spannung die maximale vierte Spannungsamplitude erreicht oder überschreitet.

Es ist möglich für eine bestimmte Torsionsschwingungsmode 14 bis 17 nur eine einzelne Messstelle 7 bis 11 heranzuziehen. Dabei kann diejenige Messstelle 7 bis 11 herangezogen werden, die die höchste rechnerisch bestimmte Spannung für die bestimmte Torsionsschwingungsmode 14 bis 17 aufweist, um ein hohes Signal zu Rausch Verhältnis zu erreichen. Dazu ist es möglich in Figur 1 für jede Torsionsschwingungsmode 14 bis 17 diejenige Messstelle 7 bis 11 zu identifizieren, die den größten Gradienten des Verdrehwinkels aufweist. Alternativ ist es möglich für jede Torsionsschwingungsmode 14 bis 17 diejenige Messstelle 7 bis 11 zu identifizieren, die die höchsten rechnerisch bestimmten Spannungen hat. In Figur 1 ist dies beispielsweise für die erste Torsionsschwingungsmode 14 die dritte Messstelle 9, für die zweite Torsionsschwingungsmode 15 die dritte Messstelle 9, für die dritte Torsionsschwingungsmode 16 die zweite Messstelle 8 und für die vierte Torsionsschwingungsmode 17 die fünfte Messstelle 11.

Es ist ebenfalls möglich, die an einer Mehrzahl an Messstellen 7 bis 11 gemessenen Spannungen zu verwenden, um die Torsionsschwingungsmode 14 bis 17, in der der Wellenstrang 2 schwingt, zu identifizieren. Dazu wird für jede Torsionsschwingungsmode 14 bis 17 ein rechnerisches Verhältnis der Form Aᵣ₁ :Aᵣ₂ :...:Aᵣₙ gebildet, wobei Aᵣₓ die rechnerisch bestimmte Spannungsamplitude an der x-ten Messstelle und n die Anzahl der Messstellen ist. Aus den aus den Messungen bestimmten Spannungsamplituden wird ein experimentelles Verhältnis der Form Aₑ₁ :Aₑ₂ :...:Aₑₙ gebildet, wobei wobei Aₑₓ die aus den Messungen bestimmte Spannungsamplitude an der x-ten Messstelle ist. Durch Vergleichen des rechnerischen Verhältnisses mit dem experimentellen Verhältnis kann selbst dann die Torsionsschwingungsmode, in der der Wellenstrang 2 schwingt, eindeutig zugeordnet werden, wenn die Eigenfrequenzen der verschiedenen Torsionsschwingungsmoden nahe zusammen liegen.

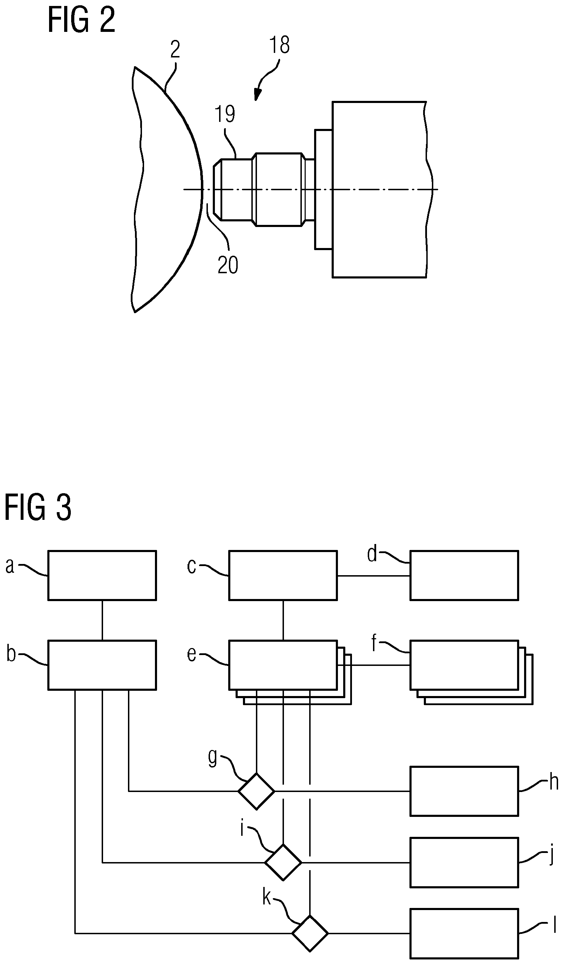

Figur 3 veranschaulicht das Verfahren in einem Ablaufdiagramm. In Schritt **a** wird eine rotordynamische Rechnung durchgeführt, in der die Eigenfrequenz für mindestens eine Torsionsschwingungsmode des Wellenstrangs 2 und die während einer Schwingungsperiode der Torsionsschwingungsmode auftretenden mechanischen Spannungen des Wellenstrangs 2 rechnerisch bestimmt werden. In Schritt **b** werden drei Grenzwerte σ_{STORE} σ_{W} und σ_{A} festgelegt, wobei σ_{STORE} < σ_{W} < σ_{A}, σ_{W} die zweite maximale Spannungsamplitude und σ_{A} die vierte maximale Spannungsamplitude sind. Dabei kann beispielsweise σ_{STORE}=0,5*σ_{A} und σ_{W}=0,75* σ_{A} gewählt werden.

In Schritt **c** werden die Spannungen des Wellenstrangs **2** gemessen und in Schritt **d** werden die gemessenen Spannungen angezeigt. In Schritt **e** werden die gemessenen Spannungen mittels der Bandpassfilter gefiltert, um die Spannungsamplituden bei der jeweiligen Eigenfrequenz zu bestimmen. In Schritt **f** werden die gefilterten Spannungsamplituden angezeigt.

In Schritt **g** wird abgefragt, ob die gefilterte Spannungsamplitude den Grenzwert σ_{STORE} überschreitet. Ist dies der Fall, so werden in Schritt **h** die gemessenen Spannungen gespeichert. Alternativ ist es möglich, die gemessenen Spannungen mit großen Zeitschritten dauernd zu speichern und in Schritt **h** die gemessenen Spannungen mit kleinen Zeitschritten zu speichern. In Schritt **i** wird abgefragt, ob die gefilterte Spannungsamplitude den Grenzwert σ_{W} überschreitet. Ist dies der Fall, so wird in Schritt **j** ein Warnsignal ausgegeben. In Schritt **k** wird abgefragt, ob die gefilterte Spannungsamplitude den Grenzwert σ_{A} überschreitet. Ist dies der Fall, so wird in Schritt **l** ein Alarmsignal ausgegeben. Das Alarmsignal kann dazu führen, dass ein Betreiber der Maschinenanlage diese manuell abschaltet. Alternativ kann das Alarmsignal dazu führen, dass eine automatische Abschaltung der Maschinenanlage erfolgt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Betreiben einer einen Wellenstrang (2) aufweisenden Maschinenanlage (1) mit den Schritten:
a) Rechnerisches Bestimmen der Eigenfrequenz von mindestens einer Torsionsschwingungsmode des Wellenstrangs (2) und rechnerisches Bestimmen der während einer Schwingungsperiode der Torsionsschwingungsmode auftretenden mechanischen Spannungen des Wellenstrangs (2);
b) Bestimmen jeweils einer Korrelation für jede Torsionsschwingungsmode zwischen einer ersten Spannungsamplitude, die an einer Position des Wellenstrangs (2) auftritt, die für die Bildung von Spannungsschäden anfällig ist, und einer zweiten Spannungsamplitude, die an einer Messstelle (7 bis 11) des Wellenstrangs (2) auftritt, anhand der für die jeweilige Torsionsschwingungsmode rechnerisch bestimmten Spannungen;
c) Festlegen einer maximalen ersten Spannungsamplitude für die Position;
d) Bestimmen einer der maximalen ersten Spannungsamplitude entsprechenden maximalen zweiten Spannungsamplitude für die Messstelle (7 bis 11) anhand der Korrelation;
e) Messen der Spannung des Wellenstrangs (2) während der Wellenstrang (2) rotiert an der Messstelle (7 bis 11) in Abhängigkeit von der Zeit;
f) Bestimmen einer Spannungsamplitude bei jeder Eigenfrequenz aus der gemessenen Spannung;
g) Ausgeben eines Signals in dem Fall, dass die aus den gemessenen Spannungen bestimmte Spannungsamplitude bei einer der Eigenfrequenzen die maximale zweite Spannungsamplitude erreicht,
wobei in Schritt c) eine zusätzliche dritte maximale Spannungsamplitude, die höher als die erste maximale Spannungsamplitude ist, für die Position festgelegt wird, in Schritt d) eine der maximalen dritten Spannungsamplitude entsprechenden maximalen vierte Spannungsamplitude für die Messstelle anhand der Korrelation bestimmt wird und in Schritt g) ein Stop-Signal in dem Fall ausgeben wird, dass die in Schritt f) bestimmte Spannungsamplitude bei der Eigenfrequenz die maximale vierte Spannungsamplitude erreicht, wobei das Stop-Signal eine Abschaltung der Maschinenanlage (1) auslöst.

2. Verfahren gemäß Anspruch 1,
wobei in Schritt e) die Spannung mittels eines magnetostriktiven Sensors (18) und/oder mittels eines Dehnmessstreifens gemessen wird, wobei die mittels des Dehnmessstreifens gemessenen Spannungen mittels Telemetrie übertragen werden.

3. Verfahren gemäß Anspruch 1 oder 2,
wobei in Schritt f) die in Schritt e) gemessenen Spannungen mittels eines Bandpassfilters gefiltert werden, der ein um die Eigenfrequenz herum angeordnetes Frequenzband passieren lässt und/oder eine Fourier Transformation, insbesondere eine Fast-Fourier-Transformation, der in Schritt e) gemessenen Spannungen durchgeführt wird.

4. Verfahren gemäß einem der Ansprüche 1 bis 3,
wobei in Schritt e) die Spannung an einer Mehrzahl in unterschiedlichen Axialpositionen des Wellenstrangs (2) angeordneten Messstellen (7 bis 11) gemessen wird.

5. Verfahren gemäß Anspruch 4,
wobei in Schritt f) für eine ausgewählte Torsionsschwingungsmode nur diejenige Messstelle herangezogen wird, die für die ausgewählte Torsionsschwingungsmode die höchste in Schritt a) rechnerisch bestimmte mechanische Spannung aufweist.

6. Verfahren gemäß Anspruch 4,
wobei in Schritt f) ein Zuordnen der Spannungsamplituden zu einer der Eigenfrequenzen erfolgt, in dem ein experimentelles Verhältnis der in Schritt f) bestimmten Spannungsamplituden und/oder Schwingungsphasen an der Mehrzahl an den Messstellen (7 bis 11) gebildet wird, ein rechnerisches Verhältnis der rechnerisch bestimmten Spannungsamplituden und/oder Schwingungsphasen an der Mehrzahl an den Messstellen (7 bis 11) gebildet wird und das experimentelle Verhältnis mit dem rechnerischen Verhältnis verglichen wird.

7. Verfahren gemäß einem der Ansprüche 1 bis 6,
wobei die in Schritt a) rechnerisch bestimmten Eigenfrequenzen entweder niedriger oder gleich der zweieinhalbfachen der Drehfrequenz des Wellenstrangs sind oder in dem Fall, dass die Maschinenanlage ein Kraftwerk zur Stromerzeugung ist und die Netzfrequenz des Kraftwerks höher als die Drehfrequenz ist, niedriger oder gleich der zweieinhalbfachen der Netzfrequenz sind.

8. Verfahren gemäß einem der Ansprüche 1 bis 7,
wobei in Schritt a) beim rechnerischen Bestimmen der Eigenfrequenz und der mechanischen Spannungen die Fliehkraftbelastung berücksichtigt wird, die der Wellenstrang (2) im Betrieb der Maschinenanlage hat.

9. Verfahren gemäß einem der Ansprüche 1 bis 8,
wobei die in Schritt b) bestimmte Korrelation zwischen der ersten Spannungsamplitude und der zweiten Spannungsamplitude eine Proportionalität ist.

10. Verfahren gemäß einem der Ansprüche 1 bis 9,
wobei in Schritt b) Korrelationen für eine Mehrzahl an Positionen des Wellenstrangs (2) bestimmt werden, die für die Bildung von Spannungsschäden anfällig sind, in Schritt c) für jede Position eine jeweilige maximale erste Spannungsamplitude festgelegt wird, in Schritt d) für jede der Positionen eine entsprechende maximale zweite Spannungsamplitude bestimmt wird und in Schritt g) das Signal in dem Fall ausgegeben wird, dass eine der maximalen zweiten Spannungsamplituden erreicht wird.

11. Verfahren gemäß einem der Ansprüche 1 bis 10,
wobei die Messstellen (7 bis 11) auf dem Wellenstrang (2) im Bereich eines frei liegenden Abschnitts des Wellenstrangs (2), im Bereich eines der Messtechnik zugänglichen Abschnitt des Wellenstrangs (2) und/oder in einem Bereich eines rechnerisch bestimmten Spannungsmaximums angeordnet sind.

12. Verfahren gemäß einem der Ansprüche 1 bis 11,
wobei die Positionen im Bereich von Lagern, Kupplungen und/oder Schaufelfüßen angeordnet sind.

## Claims

1. Method for operating a machine plant (1) having a shaft train (2), with the steps of:
a) computationally determining the natural frequency of at least one torsional oscillation mode of the shaft train (2) and computationally determining the mechanical stresses of the shaft train (2) occurring during an oscillation period of the torsional oscillation mode;
b) determining in each case a correlation for each torsional oscillation mode between a first stress amplitude, which occurs at a position of the shaft train (2) that is susceptible to the formation of stress damage, and a second stress amplitude, which occurs at a measuring location (7 to 11) of the shaft train (2), on the basis of the stresses computationally determined for the respective torsional oscillation mode;
c) establishing a maximum first stress amplitude for the position;
d) determining a maximum second stress amplitude, corresponding to the maximum first stress amplitude, for the measuring location (7 to 11) on the basis of the correlation;
e) measuring the stress of the shaft train (2) while the shaft train (2) is rotating at the measuring location (7 to 11) in a time-dependent manner;
f) determining a stress amplitude at each natural frequency from the measured stress;
g) emitting a signal in the event that, at one of the natural frequencies, the stress amplitude determined from the measured stresses reaches the maximum second stress amplitude,
wherein in step c) an additional third maximum stress amplitude, which is higher than the first maximum stress amplitude, is established for the position, in step d) a maximum fourth stress amplitude, corresponding to the maximum third stress amplitude, is determined for the measuring location on the basis of the correlation and in step g) a stop signal is emitted in the event that the stress amplitude at the natural frequency that is determined in step f) reaches the maximum fourth stress amplitude, the stop signal initiating a shutdown of the machine plant (1).

2. Method according to Claim 1,
wherein in step e) the stress is measured by means of a magnetostrictive sensor (18) and/or by means of a strain gage, the stresses measured by means of the strain gage being transmitted by means of telemetry.

3. Method according to Claim 1 or 2,
wherein in step f) the stresses measured in step e) are filtered by means of a bandpass filter, which allows a frequency band arranged around the natural frequency to pass, and/or a Fourier transformation, in particular a fast Fourier transformation, of the stresses measured in step e) is carried out.

4. Method according to one of Claims 1 to 3,
wherein in step e) the stress is measured at a plurality of measuring locations (7 to 11) arranged at different axial positions of the shaft train (2).

5. Method according to Claim 4,
wherein only the measuring location that has the highest mechanical stress, computationally determined in step a), for a selected torsional oscillation mode is used in step f) for the selected torsional oscillation mode.

6. Method according to Claim 4,
wherein in step f) there is an assignment of the stress amplitudes to one of the natural frequencies, in which an experimental ratio of the stress amplitudes and/or oscillation phases, determined in step f), at the plurality of measuring locations (7 to 11) is formed, a computational ratio of the computationally determined stress amplitudes and/or oscillation phases at the plurality of measuring locations (7 to 11) is formed and the experimental ratio is compared with the computational ratio.

7. Method according to one of Claims 1 to 6,
wherein the natural frequencies computationally determined in step a) are either lower or equal to two and a half times the rotational frequency of the shaft train or, in the event that the machine plant is a power plant for generating electricity and the grid frequency of the power plant is higher than the rotational frequency, lower or equal to two and a half times the grid frequency.

8. Method according to one of Claims 1 to 7,
wherein in step a) the centrifugal loading that the shaft train (2) has during the operation of the machine plant is taken into account in the computational determination of the natural frequency and the mechanical stresses.

9. Method according to one of Claims 1 to 8,
wherein the correlation between the first stress amplitude and the second stress amplitude that is determined in step b) is a proportionality.

10. Method according to one of Claims 1 to 9,
wherein in step b) correlations are determined for a plurality of positions of the shaft train (2) that are susceptible to the formation of stress damage, in step c) a respective maximum first stress amplitude is established for each position, in step d) a corresponding maximum second stress amplitude is determined for each of the positions and in step g) the signal is emitted in the event that one of the maximum second stress amplitudes is reached.

11. Method according to one of Claims 1 to 10,
wherein the measuring locations (7 to 11) on the shaft train (2) are arranged in the region of an exposed portion of the shaft train (2), in the region of a portion of the shaft train (2) that is accessible for the measuring technique and/or in the region of a computationally determined stress maximum.

12. Method according to one of Claims 1 to 11,
wherein the positions are arranged in the region of bearings, couplings and/or blade roots.

## Revendications

1. Procédé pour faire fonctionner une installation ( 1 ) de machine ayant une ligne ( 2 ) d'arbre, comprenant les stades :
a ) détermination par le calcul de la fréquence propre d'au moins un mode d'oscillation en torsion de la ligne ( 2 ) d'arbre et détermination par le calcul des contraintes mécaniques de la ligne ( 2 ) d'arbre se produisant pendant une période d'oscillation du mode d'oscillation en torsion;
b ) détermination respectivement d'une corrélation pour chaque mode d'oscillation en torsion entre une première amplitude de contrainte, qui apparaît en une position de la ligne ( 2 ) d'arbre, qui est sujette à la formation de défauts de contrainte, et une deuxième amplitude de contrainte, qui apparaît en un point ( 7 à 11 ) de mesure de la ligne ( 2 ) d'arbre, à l'aide des contraintes déterminées par le calcul pour les modes respectifs d'oscillation en torsion;
c ) fixation d'une première amplitude maximum de contrainte pour la position;
d ) détermination d'une deuxième amplitude maximum de contrainte, correspondant à la première amplitude maximum de contrainte, pour le point ( 7 à 11 ) de mesure à l'aide de la corrélation;
e ) mesure de la contrainte de la ligne ( 2 ) d'arbre pendant que la ligne ( 2 ) d'arbre tourne au point ( 7 à 11 ) de mesure en fonction du temps;
f ) détermination d'une amplitude de contrainte à chaque fréquence propre à partir de la contrainte mesurée;
g ) émission d'un signal dans le cas où l'amplitude de contrainte, déterminée à partir des contraintes mesurées, atteint, à la fréquence propre, la deuxième amplitude maximum de contrainte,
dans lequel, au stade c ), on fixe, pour la position, une troisième amplitude maximum de contrainte supplémentaire, qui est plus grande que la première amplitude maximum de contrainte, au stade d ) on détermine une quatrième amplitude maximum de contrainte, correspondant à la troisième amplitude maximum de contrainte, pour le point de mesure à l'aide de la corrélation, et au stade g ) on émet un signal d'arrêt dans le cas où l'amplitude de contrainte déterminée au stade f ) atteint, à la fréquence propre, la quatrième amplitude maximum de contrainte, le signal d'arrêt déclenchant un arrêt de l'installation ( 1 ) de machine.

2. Procédé suivant la revendication 1,
dans lequel, au stade e ), on mesure la contrainte au moyen d'un capteur ( 18 ) magnétostrictif et/ou au moyen d'un extensomètre, les contraintes mesurées au moyen de l'extensomètre étant transmises au moyen de la télémétrie.

3. Procédé suivant la revendication 1 ou 2,
dans lequel, au stade f ), on filtre les contraintes mesurées au stade e ) au moyen d'un filtre passe bande, qui laisse passer une bande de fréquence autour de la fréquence propre et/ou on effectue une transformation de Fourier, notamment une transformation de Fourier accélérée des contraintes mesurées au stade e ).

4. Procédé suivant l'une des revendications 1 à 3,
dans lequel, au stade e ), on mesure la contrainte en une pluralité de points ( 7 à 11 ) de mesure disposés en des positions axiales différentes de la ligne ( 2 ) d'arbre.

5. Procédé suivant la revendication 4,
dans lequel, au stade f ), on tire parti, pour un mode d'oscillation en torsion sélectionné, seulement du point de mesure, qui a, pour le mode d'oscillation en torsion sélectionné, la contrainte mécanique, déterminée par le calcul, la plus grande au stade a ).

6. Procédé suivant la revendication 4,
dans lequel, au stade f ), a lieu une affectation des amplitudes de contrainte à l'une des fréquences propres en formant, à la pluralité des points ( 7 à 11 ) de mesure, un rapport expérimental entre les amplitudes de contrainte et/ou les phases d'oscillation déterminées au stade f ), en formant, en la pluralité des points ( 7 à 11 ) de mesure, un rapport par le calcul entre les amplitudes de contrainte et/ou les phases d'oscillation déterminées par le calcul et en comparant le rapport expérimental au rapport calculé.

7. Procédé suivant l'une des revendications 1 à 6,
dans lequel les fréquences propres, déterminées par le calcul au stade a ), sont soit inférieures, soit égales à deux fois et demi la fréquence de rotation de la ligne d'arbre ou, dans le cas où l'installation de machine est une centrale de production du courant électrique et la fréquence de réseau de la centrale est plus grande que la fréquence de rotation, sont plus petites ou égales à deux fois et demi la fréquence de réseau.

8. Procédé suivant l'une des revendications 1 à 7,
dans lequel, au stade a ), lors de la détermination par le calcul de la fréquence propre et des contraintes mécaniques, on tient compte de la force centrifuge qu'a la ligne ( 2 ) d'arbre, alors que l'installation de machine fonctionne.

9. Procédé suivant l'une des revendications 1 à 8,
dans lequel la corrélation déterminée au stade b ), entre la première amplitude de contrainte et la deuxième amplitude de contrainte, est une proportionnalité.

10. Procédé suivant l'une des revendications 1 à 9,
dans lequel, au stade b ), on détermine des corrélations pour une pluralité de positions de la ligne ( 2 ) d'arbre, qui sont sujettes à la formation de défauts de contrainte, au stade c ) on fixe, pour chaque position, une première amplitude maximum de contrainte respective, au stade d ) on détermine, pour chacune des positions, une deuxième amplitude maximum de contrainte correspondante et au stade g ) on émet un signal dans le cas où est atteinte l'une des deuxièmes amplitudes maximum de contrainte.

11. Procédé suivant l'une des revendications 1 à 10,
dans lequel les points ( 7 à 11 ) de mesure sont disposés sur la ligne ( 2 ) d'arbre dans la région d'un tronçon libre de la ligne ( 2 ) d'arbre, dans la région d'un tronçon accessible à la technique de mesure de la ligne ( 2 ) d'arbre et/ou dans une région d'un maximum de contrainte déterminé par le calcul.

12. Procédé suivant l'une des revendications 1 à 11,
dans lequel les positions sont dans la région de paliers, d'accouplements et/ou d'emplantures d'aube.
